# EUROPEAN PATENT SPECIFICATION

(11) **EP 3 547 420 B1**
(45) Date of publication and mention of the grant of the patent: **30.12.2020**
(21) Application number: 17874074.2
(22) Date of filing: 23.11.2017
(51) Int. Cl.: H01M 4/48, H01M 6/00

(54) **MANUFACTURING METHOD OF HYDROGEN-CONTAINING TRANSITION METAL OXIDE**
HERSTELLUNGSVERFAHREN EINES WASSERSTOFFHALTIGEN ÜBERGANGSMETALLOXID
PROCÉDÉ DE FABRICATION D' OXYDE DE MÉTAL DE TRANSITION CONTENANT DE L'HYDROGÈNE

(30) Priority: 23.11.2016 CN 201611046871
(43) Date of publication of application: 02.10.2019
(73) Proprietor: Tsinghua University, Haidian District Beijing 100084 (CN)
(72) Inventor: YU, Pu, Beijing 100084 (CN); LU, Nianpeng, Beijing 100084 (CN); WU, Jian, Beijing 100084 (CN); ZHOU, Shuyun, Beijing 100084 (CN)
(74) Representative: Balder IP Law, S.L.
(86) International application number: PCT/CN2017/112667
(87) International publication number: WO 2018/095376

(56) References cited:
- EP-A1- 2 730 542
- EP-A1- 3 547 431
- CN-A- 1 367 546
- CN-A- 1 740 377
- CN-A- 102 282 098
- US-A1- 2015 148 218
- US-B2- 6 964 827
- US-B2- 7 666 550
- LIM DAE-KWANG ET AL: "Electrochemical hydrogen charge and discharge properties of La0.1Sr0.9Co1-yFeyO3-[delta](y=0, 0.2, 1) electrodes in alkaline electrol", ELECTROCHIMICA ACTA, ELSEVIER, AMSTERDAM, NL, vol. 102, 17 April 2013 (2013-04-17), pages 393-399, XP028556570, ISSN: 0013-4686, DOI: 10.1016/J.ELECTACTA.2013.03.196
- HAYWARD M A ET AL: "The Hydride Anion in an Extended Transition Metal Oxide Array: LaSrCoO_3H_0.7", ARXIV.ORG, CORNELL UNIVERSITY LIBRARY, 201 OLIN LIBRARY CORNELL UNIVERSITY ITHACA, NY 14853, 27 July 2002 (2002-07-27), XP080086807, DOI: 10.1126/SCIENCE.1068321
- N. LU ET AL: "Electric-field control tri-phase transformation with a selective dual-ion switch", NATURE, [Online] vol. 124, no. 546, 1 June 2017 (2017-06-01), XP002794615, DOI: 10.1038/nature22389 Retrieved from the Internet: URL:https://doi.org/10.1038/22389>
- JEEN, H. ET AL.: 'Topotactic Phase Transformation of the Brownmillerite SrCo02.5 to the Perovskite SrCoO3-delta' ADVANCED MATERIALS vol. 25, 19 September 2013, ISSN 0935-9648 pages 3651 - 3656, XP055509771

## Description

### TECHNICAL FIELD

The present disclosure relates to the field of material technology, in particular to a hydrogen-containing transition metal oxides.

### BACKGROUND

A thermology method is adopted to hydrogenate an oxide. For example, the oxide can be reduced by some hydrides such as CaH2 and NaH. H ions would substitute O of the oxide to form H-M bonds (M is a transition metal). Since the H-M bond is shorter than M-O, the hydrogenated oxide exhibits a characteristic of reduced lattice volume. The hydrogenation to the transition metal oxide, on one hand, changes the lattice structure of the transition metal oxide, and on the other hand, changes an electrical or magnetic property of the material due to the accompanied doping of electron or hole. In addition, the oxygen of the oxide sometimes may be carried away during the hydrogenation so as to form a structural phase with an oxygen vacancy. Some hydrogen-containing oxides, such as hydrogenated LaSrCoO₃, BaTiO₃, VO₂, TiO₂, and the like, have been made. In addition to the hydrogenation method, a structural transition of a material can also be achieved by a thermal oxidation method. For example, a transformation from SrCoO_{2.5} with a brownmillerite structure to SrCoO₃ with a perovskite structure can be achieved by a high oxygen pressure oxidation method.

The above methods are all restricted to a regulation between two phases. However, there is no hydrogen-containing transition metal oxide capable of achieving a tri-state phase transformation and no method for regulating the hydrogen-containing transition metal oxide by an electric field to achieve the tri-state phase transformation.

In addition, Lim Dae-Kwang et al., Electrochimica Acta, vol. 102 (2013), pages 393-399 discloses that in order to test for hydrogen storage ability of La_{0.1}Sr_{0.9}Co_{1-y}Fe_{y}O_{3-δ} (y=0.08,1) electrodes, hydrogen charge/discharge performance was measured using 6 M KOH solution as electrolyte at the room temperature. The charge/discharge currents were determined by the sample weight and measured using a galvanostatic method. All working electrolyte were cyclically charged at 20 mAg⁻¹ for 10 h and discharged at the same current density to the cut-off voltage of -0.3V.

EP 2730542 A1 discloses a hydrogen-containing transition metal oxide with structural formula BaTiOₓH_{y} with x from 2.4 to 2.91 and y from 0.09 to 0.6.

Hayward M.A. et al., ARXIVORG, Cornell University Library, 201 OLlN LIBRARY CORNELL UNIVERSITY ITHACA, NY 14853, 2002, XP080086807, DOI:10.1126/SCIENCE.1 068321 discloses hydrogen-containing transition metal oxide LaSrCoO₃H_{0.7}.

US2015/148218 A1 discloses the perovskite SrCoO_{3-δ} and the brownmillerite SrCoO_{2.5} as epitaxially stabilised thin films.

### SUMMARY

In view of this, for the problems as described above, it is necessary to provide a method for manufacturing a hydrogen-containing transition metal oxide, wherein a transformation among three phases can be achieved by the hydrogen-containing transition metal oxide.

A hydrogen-containing transition metal oxide is provided by the method of claim 1. The hydrogen-containing transition metal oxide has a structural formula of ABOₓH_{y}, wherein A is one or more of alkaline earth metal elements and rare-earth metal elements, B is one or more of transition metal elements, x is a numeric value in a range of 1 to 3, and y is a numeric value in a range of 0 to 2.5.

In one embodiment, the alkaline earth metal elements include Be, Mg, Ca, Sr, and Ba; the rare-earth metal elements include La, Ce, Pr, Nd, Pm, Sm, Eu, Gd, Tb, Dy, Ho, Er, Tm, and Yb; and the transition metal elements include Co, Cr, Fe, Mn, Ni, Cu, Ti, Zn, Sc, and V.

In one embodiment, B is transition metal element Co.

In one embodiment, A is alkaline earth metal element Sr.

In one embodiment, x is 2.5 and y is 0 to 2.5.

A method for making a hydrogen-containing transition metal oxide is provided, including steps of:
S100, providing a transition metal oxide having a structural formula of ABO_{z}, wherein z is greater than or equal to 2 and smaller than or equal to 3;
S200, soaking the transition metal oxide with an ionic liquid, wherein water in the ionic liquid is capable of being decomposed into hydrogen ions and oxygen ions under an action of an electric field; and
S300, applying an electric field to the transition metal oxide to cause the hydrogen ions in the ionic liquid to insert into the transition metal oxide.

In one embodiment, the step of S100 includes steps of:
S110, providing a substrate;
S120, depositing a film of the transition metal oxide having a structural formula of ABO_{z} onto a surface of the substrate; and
S130, forming a first electrode on a surface of the film of the transition metal oxide.

In one embodiment, the substrate is one of a ceramic substrate, a silicon substrate, a glass substrate, a metal substrate, or a polymer. In the step of S120, the film of the transition metal oxide is obtained via an epitaxial growth on the surface of the substrate by using a pulsed laser deposition method.

In one embodiment, in the step of S130, the first electrode contacts the film of the transition metal oxide to form a bottom electrode.

In one embodiment, the step of S300 includes steps of:
S310, providing a second electrode and a power source;
S320, disposing the second electrode to be spaced from the first electrode, and electrically and respectively connecting the second electrode and the first electrode to the power source;
S330, soaking the second electrode with the ionic liquid and applying an electric field in a direction from the second electrode to the first electrode by the power source.

A primary battery may be produced including a cathode electrode, an anode electrode spaced from the cathode electrode, and an electrolyte disposed between the cathode electrode and the anode electrode, wherein the cathode electrode and the anode electrode are the hydrogen-containing transition metal oxide as described in above embodiments.

In the present disclosure, the method for making a hydrogen-containing transition metal oxide with a novel crystal structure is achieved by an electric field controlled hydrogenation. In combination of the electric field controlled hydrogenation and the electric field controlled oxidization, a controllable transformation under the electric fields among three different structural phases are achieved by using the hydrogen-containing transition metal oxide, and an abundant regulations to the states and the properties of the materials are achieved.

### BRIEF DESCRIPTION OF THE DRAWINGS

FIG. 1 shows a flowchart of a method for making a hydrogen-containing transition metal oxide, provided in embodiments of the present disclosure;
FIG. 2 shows test curves of Rutherford Back Scattering (RBS) and Hydrogen Forward Scattering (HFS) of SrCoO_{2.8}H_{0.82} (a, b), SrCoO₃H_{1.95} (c, d), and SrCoO_{2.5}H_{2.38} (e, f), provided in embodiments of the present disclosure;
FIG. 3 is a diagram of an apparatus and a principle for a method for regulating an ionic liquid gating voltage, provided in embodiments of the present disclosure;
FIG. 4 shows a variation of diffraction peak of XRD in the method for regulating the ionic liquid gating voltage, wherein the corresponding phases are SrCoO_{2.5}, SrCoO_{3-δ}, and SrCoO_{2.5}H, respectively.
FIG. 5 shows structural characterization spectra of X-ray diffraction of SrCoO_{2.5}, SrCoO_{3-δ}, and SrCoO_{2.5}H, provided in embodiments of the present disclosure;
FIG. 6 shows a characterization of the crystal quality of a film before and after the regulation to the ionic liquid gating voltage, provided in embodiments of the present disclosure;
FIG. 7 shows XRD of three phases with different thicknesses, i.e. corresponding to (a) 20 nm, (b) 40nm, (c) 60nm, and (d) 100nm, respectively, provided in embodiments of the present disclosure;
FIG. 8 shows ex-situ XRD results of the SrCoO_{2.5} phase on substrates with different stresses, i.e. SrTiO₃ (001) (a) and LaAlO₃ (001) (b), after the regulation to the ionic liquid gating voltage, provided in embodiments of the present disclosure;
FIG. 9 shows pseudo-cubic lattice volumes obtained from XRD corresponding to the three structural phases, provided in embodiments of the present disclosure;
FIG. 10 shows absorption spectroscopies at an L-edge of Co (a) and at a K-edge of O (b) of the three phases, SrCoO_{2.5}, SrCoO_{3-δ}, and SrCoO_{2.5}H, provided in embodiments of the present disclosure;
FIG. 11 shows depth dependent relationships of concentrations of H atom and Al atom in the three phases, SrCoO_{2.5}, SrCoO_{3-δ}, and SrCoO_{2.5}H measured by a secondary-ion mass spectrometry, provided in embodiments of the present disclosure;
FIG. 12 shows a method for making a new phase ABOₓH_{y} and a regulating method among three phases, provided in embodiments of the present disclosure;
FIG. 13 shows photos of the three structural phases and a variation of the optical bandgap of the three structural phases, provided in embodiments of the present disclosure;
FIG. 14 shows different electrochromic transmittance spectra of the three structural phases and a schematic diagram of a smart glass, provided in embodiments of the present disclosure;
FIG. 15 shows absorption spectroscopies obtained from the transmittance spectra, provided in embodiments of the present disclosure;
FIG. 16 shows electrical transport properties, i.e. temperature dependences of resistivities of the three structural phases, SrCoO_{2.5}, SrCoO_{3-δ}, and SrCoO_{2.5}H, provided in embodiments of the present disclosure;
FIG. 17 shows magnetic characterizations of the three structural phases, provided in embodiments of the present disclosure;
FIG. 18 shows a multi-state magnetoelectric coupling effect among the three structural phases, i.e. SrCoO_{2.5} with a property of an antiferromagnetic insulator, SrCoO_{2.5}H with a property of a ferromagnetic insulator, and SrCoO_{3-δ} with a property of a ferromagnetic metal, provided in embodiments of the present disclosure;
FIG. 19 shows a magnetoelectric coupling corresponding to a phase transformation of different magnetic ground states at different temperatures, provided in embodiments of the present disclosure;
FIG. 20 shows a model of penta-state memory established upon the magnetoelectric coupling effect and spin value structure.
FIG. 21 is a structure schematic diagram of a primary battery;
FIG. 22 is a working principle schematic diagram of the primary battery.

### DETAILED DESCRIPTION

Embodiments of the present disclosure provide a hydrogen-containing transition metal oxide capable of achieving a tri-state phase transformation. The hydrogen-containing transition metal oxide has a structural formula of ABOₓH_{y}, wherein A is one or more of alkaline earth metal elements and rare-earth metal elements, B is one or more of transition metal elements, x is a numeric value in a range of 1 to 3, and y is a numeric value in a range of 0 to 2.5. Wherein a ratio of A and B in ABOₓH_{y} may not be exactly 1:1, since a deviation from exact 1:1 may have occurred due to a vacancy and an interstitial atom commonly found in an oxide. Therefore, hydrogen-containing transition metal oxides having a ratio of A and B approaching 1:1 are all within the protection scope of the application. Preferably, x is a numeric value in a range of 1 to 3, and y is a numeric value in a range of 0 to 2.5. The alkaline earth metal elements can include Be, Mg, Ca, Sr, and Ba. The rare-earth metal elements can include La, Ce, Pr, Nd, Pm, Sm, Eu, Gd, Tb, Dy, Ho, Er, Tm, and Yb. The transition metal elements can include one or more of Co, Cr, Fe, Mn, Ni, Cu, Ti, Zn, Sc, and V. It is to be understood that A also can be an alloy of an alkaline earth metal and a rare-earth metal, and B also can be an alloy of a transition metal and a main group metal.

The hydrogen-containing transition metal oxide ABOₓH_{y} has a stable crystal structure at a normal temperature, and an addition and a subtraction of hydrogen and an addition and a subtraction of oxygen for the hydrogen-containing transition metal oxide soaked with an ionic liquid can be achieved under an action of an electric field by using a method of regulating an ionic liquid gating voltage at a normal temperature, so as to be able to achieve: a phase transformation from a first phase to a second phase, and a phase transformation from the second phase back to the first phase; a phase transformation from the first phase to a third phase, and a phase transformation from the third phase to the first phase; and a phase transformation from the second phase to the third phase, and a phase transformation from the third phase back to the second phase. Wherein the first phase has a lattice volume larger than that of the second phase, and the second phase has a lattice volume larger than that of the third phase. It should be understood that a cyclic transformation among the above three phases can be further achieved by the method of regulating the ionic liquid gating voltage. Since the hydrogen-containing transition metal oxide has different physical properties when in the form of the above three phases, an application on an electrical device can be achieved by the transformation among the above three phases. The materials have different molecular formulas in the forms of the three phases. The material in the form of the first phase is the hydrogen-containing transition metal oxide ABOₓH_{y}. The second phase is achieved by extracting hydrogen from or inserting oxygen into the hydrogen-containing transition metal oxide ABOₓH_{y} by the method of regulating the ionic liquid gating voltage based upon the hydrogen-containing transition metal oxide ABOₓH_{y}. The third phase is achieved by further extracting hydrogen from or inserting oxygen into the hydrogen-containing transition metal oxide ABOₓH_{y} based on the second phase by the method of regulating the ionic liquid gating voltage based upon the hydrogen-containing transition metal oxide ABOₓH_{y}. In one embodiment, the tri-state phase transformation is to achieve a transformation among three phases ABOₓH_{y}, ABO_{2.5}, and ABO_{3-δ}. Meanwhile, the above transformation can form a reversible structural transition among three quite different phases under a control of an electric field. Moreover, the three phases have quite different electrical, optical, and magnetic properties. The hydrogen-containing transition metal oxide, the method for making the same, the tri-state phase transformation, and the application will be described in detail below.

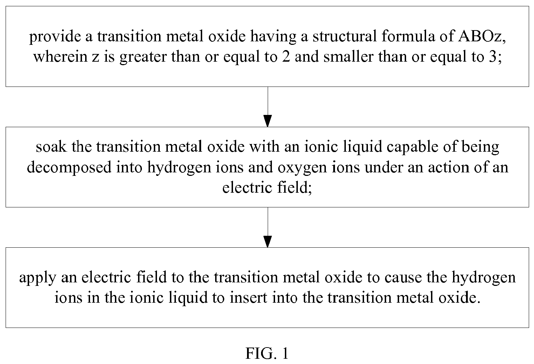

Referring to FIG. 1, embodiments of the present disclosure provide the method for making the hydrogen-containing transition metal oxide, including the steps of:
S100, providing a transition metal oxide having a structural formula of ABO_{z}, wherein z is greater than or equal to 2 and smaller than or equal to 3;
S200, soaking the transition metal oxide with an ionic liquid; and
S300, applying an electric field to the transition metal oxide to cause the hydrogen ions in the ionic liquid to insert into the transition metal oxide.

In step S100, A is one or more of alkaline earth metal elements and rare-earth metal elements. B is one or more of transition metal elements Co, Cr, Fe, Mn, Ni, Cu, Ti, Zn, Sc, and V. The alkaline earth metal elements can include Be, Mg, Ca, Sr, and Ba. The rare-earth metal elements can include La, Ce, Pr, Nd, Pm, Sm, Eu, Gd, Tb, Dy, Ho, Er, Tm, and Yb. A form of the transition metal oxide having the structural formula of ABO_{z} is not limited and can be a film, a powder, a bulk material, a nano-particle, or a material composited with other material. In one embodiment, the transition metal oxide having the structural formula of ABO_{z} is in form of a film. It is to be understood that a method for making the film of the transition metal oxide is not limited and the film of the transition metal oxide can be made by a variety of methods.

In one embodiment, the step of S100 includes the steps of:
S110, providing a substrate;
S120, depositing a film of the transition metal oxide having a structural formula of ABO_{z} onto a surface of the substrate; and
S130, forming a first electrode on a surface of the film of the transition metal oxide.

The substrate is not limited and can be one of a ceramic substrate, a silicon substrate, a glass substrate, a metal substrate, or a polymer. Any substrate can be used for forming a film thereon can be used in the step of S100. A method for forming the film of the transition metal oxide having a structural formula of ABO_{z} is not limited and can be various film forming methods, such as an ion sputtering method, a chemical vapor deposition method, a magnetron sputtering method, a gelation method, a laser pulse deposition method, etc. In one embodiment, in step S120, the film of the transition metal oxide is obtained via an epitaxial growth on the substrate by using a pulsed laser deposition method. A thickness of the grown film of the transition metal oxide is not limited. Preferably, the film of the transition metal oxide has a thickness from 5 nm to 200 nm. In the step of S130, the first electrode contacts the film of the transition metal oxide to form a bottom electrode. It is to be understood that the first electrode can be located at a surface of the film of the transition metal oxide closing the substrate, or located at a surface of the film of the transition metal oxide away from the substrate. The first electrode can be a metal or various conductive films and the film of the transition metal oxide itself. In one embodiment, the first electrode is an ITO film. The ionic liquid can be various types of ionic liquids. In one embodiment, the ionic liquid is DEME-TFSI.

In step S200, one ionic liquid layer can be formed on a surface of the transition metal oxide. The ionic liquid can be various types of ionic liquids, as long as the ionic liquid is able to provide the required hydrogen ions and oxygen ions by hydrolyzing or other manner and cover the transition metal oxide. When the transition metal oxide and the ionic liquid are in an electrical field, the hydrogen ions and the oxygen ions in the ionic liquid can be controlled to be inserted into or otherwise extracted from the transition metal oxide by a direction of the electrical field. A water amount in the ionic liquid is not limited. Experiments have proved that as long as little water (>100 ppm) is provided in the ionic liquid, the insertion and extraction of the hydrogen ions and oxygen ions can be achieved.

It is to be understood that in the step of S300, a variety of methods can be used to apply the electrical field to the transition metal oxide. In one embodiment, the step of S300 includes steps of:
S310, providing a second electrode and a power source;
S320, disposing the second electrode to be spaced from the first electrode, and connecting the second electrode and the first electrode electrically and respectively to the power source;
S330, soaking the second electrode with the ionic liquid and applying an electric field in a direction from the second electrode to the first electrode by the power source.

In step S310, a shape of the second electrode is not limited. The second electrode can be a parallel-plate electrode, a rodlike electrode, or a metal mesh electrode. In one embodiment, the second electrode is an electrode consisting of a spring-like metal wire. The power source can be various direct current power sources, alternating current power sources, etc. A voltage of the power source is adjustable so as to be used for controlling a period of a reaction. In one embodiment, the power source is a direct current power source.

In step S320, the second electrode is disposed to be spaced from the first electrode, so that a directed electric field can be formed between the second electrode and the first electrode. Connection manners of the second electrode and the first electrode to the direct current power source are not limited. The application of the voltage to the first electrode and the second electrode can be controlled by a switch.

In the step of S330, the second electrode is soaked with the ionic liquid. When power is applied to the first electrode and the second electrode, the first electrode can be connected to a negative pole of the direct current power source, and the second electrode can be connected to a positive pole of the direct current power source, so that the electric field with a direction pointed from the second electrode to the first electrode can be generated between the first electrode and the second electrode. Since the ionic liquid exists between the first electrode and the second electrode, the positively charged hydrogen ions in the ionic liquid will move toward the first electrode under the action of the electric field, so that the positively charged hydrogen ions are collected on the surface of the film of the transition metal oxide and further inserted into the transition metal oxide, thereby obtaining the hydrogen-containing transition metal oxide. The negatively charged oxygen ions are extracted from the sample and enter into the ionic liquid. It is to be understood that when the electric field is inverted, the ion change process as described above will also be correspondingly inverted. Therefore, upon the change of the electric field, the process as described above is a reversible process.

Films of strontium cobalt oxides SrCoOₓH_{y} with different hydrogen amounts and oxygen amounts can be obtained by the method of regulating the ionic liquid gating voltage. In one embodiment, the hydrogen-containing transition metal oxide ABOₓH_{y} is SrCoO_{2.8}H_{0.82}, SrCoO_{2.5}H, SrCoO₃H_{1.95}, or SrCoO_{2.5}H_{2.38}.

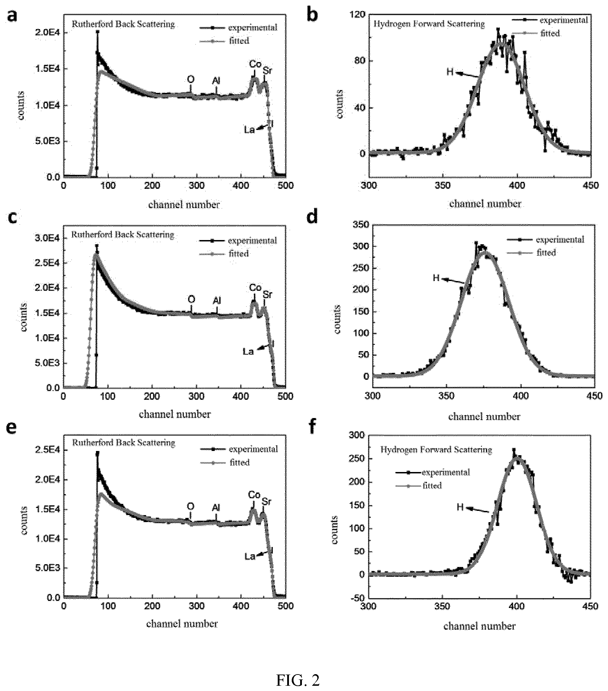

Referring to FIG. 2, in order to determine the hydrogen amount and oxygen amount in a SrCoOₓH_{y} film obtained by the method as described above, hydrogen amounts and oxygen amounts in three types of SrCoOₓH_{y} films are quantitatively measured by a method combining Hydrogen Forward Scattering with Rutherford Back Scattering. According to the measurement result, obtained ratios of Co atom to H atom in different films are 1:0.82 (FIGs. 2a and 2b), 1:1.95 (FIGs. 2c and 2d), and 1:2.38 (FIGs. 2e and 2f) respectively. Stoichiometric ratios of elements of three types of SrCoOₓH_{y} are SrCoO_{2.8}H_{0.82}, SrCoO₃H_{1.95}, and SrCoO_{2.5}H_{2.38} respectively. A topological phase transformation among three quite different phases achieved under a control of an invertible electric field can be provided for all of SrCoO_{2.8}H_{0.82}, SrCoO₃H_{1.95}, and SrCoO_{2.5}H_{2.38}, and these three structural phases have quite different electrical, optical, and magnetic properties. The hydro-containing transition metal oxide ABOₓH_{y} can be SrCoO_{2.8}H_{0.82}, SrCoO_{2.5}H, SrCoO₃H_{1.95}, or SrCoO_{2.5}H_{2.38}.

Taking SrCoO_{2.5}H as an example, a phase transformation among three phases SrCoO_{2.5}, SrCoO_{3-δ}, and SrCoO_{2.5}H is described as below, wherein SrCoO_{2.5}H corresponds to a first phase, SrCoO_{2.5} corresponds to a second phase, and SrCoO_{3-δ} corresponds to a third phase.

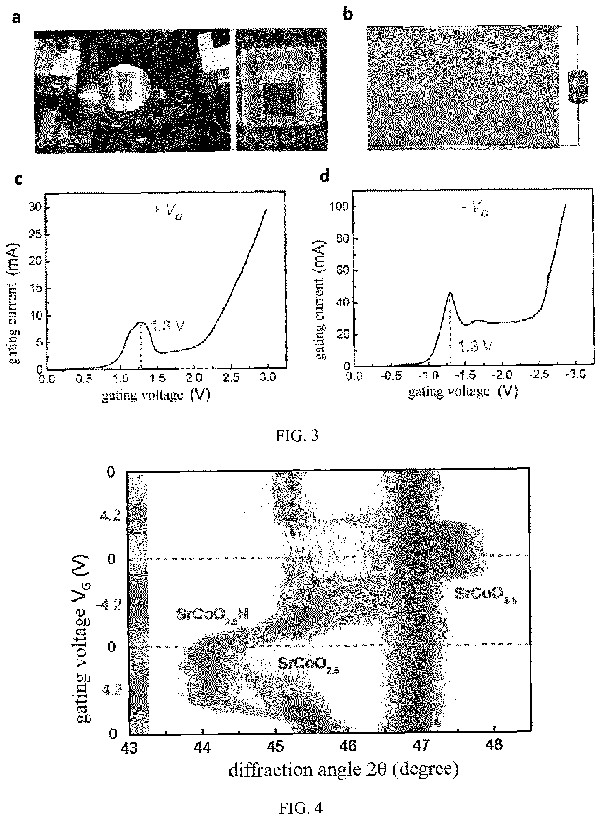

Referring to FIG. 3, an apparatus for controlling the phase transformation of SrCoO_{2.5}H by a gating voltage is shown. A preparation of a new phase SrCoO_{2.5}H and a reversible and nonvolatile transformation among the three structural phases under a control of an electric field at room temperature are achieved by using the method of regulating the ionic liquid gating voltage via the apparatus shown in FIG. 3. In FIG. 3, a silver conductive adhesive is coated as an electrode on an edge of a SrCoO_{2.5}H film and a surface of the SrCoO_{2.5}H film is covered by an ionic liquid. A spiral Pt electrode spaced from the silver conductive adhesive is the other electrode. In the present embodiment, an ionic liquid DEME-TFSI is used, in which the required hydrogen ions and oxygen ions for the transformation can be obtained by hydrolyzing a water molecule therein. While this effect can be generalized to other ionic liquids, ionic salts, polymers, polar materials, and so on, as long as the required hydrogen ions and oxygen ions can be obtained therefrom and enabled to be inserted into a material or extracted from a material under a drive of an electric field.

Referring to FIG. 4, this figure shows an in situ XRD of a tri-state phase transformation controlled by the method of regulating the gating voltage. As it can be seen, in the ionic liquid, when a positive gating voltage (an increasing rate of the voltage is 2 mV/s) is applied to a SrCoO_{2.5} film, the (004) diffraction peak at 45.7° diminishes gradually and eventually disappears, while a diffraction peak corresponding to the new phase starts to develop at 44.0°, suggesting that the new structural phase SrCoO_{2.5}H is obtained. When gradually changing to a negative gating voltage, the new phase SrCoO_{2.5}H reverts back to SrCoO_{2.5} quickly, when further increasing the negative gating voltage, SrCoO_{2.5}H is transformed to a SrCoO_{3-δ} phase having a perovskite structure. In addition, the structure transition can also be modulated reversibly by regulating the in situ electric field. When changing to positive gating voltages, SrCoO_{3-δ} phase reverts back to SrCoO_{2.5} phase and SrCoO_{2.5}H quickly. Therefore, a reversible structure transition among the SrCoO_{2.5} phase having the brownmillerite structure, the SrCoO_{3-δ} phase having the perovskite structure, and the SrCoO_{2.5}H phase is achieved by controlling the electric field. An important feature is that these regulated new phases are nonvolatile, that is, when the electric field is removed, their structural phases and respective physical properties are still kept.

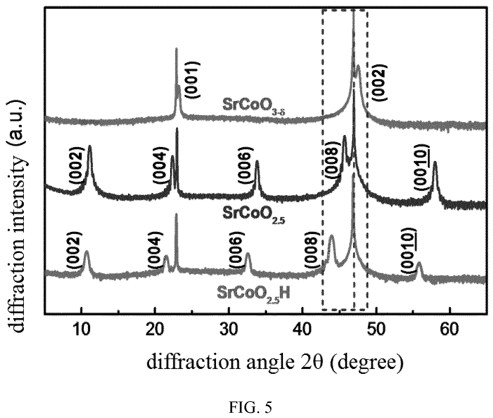

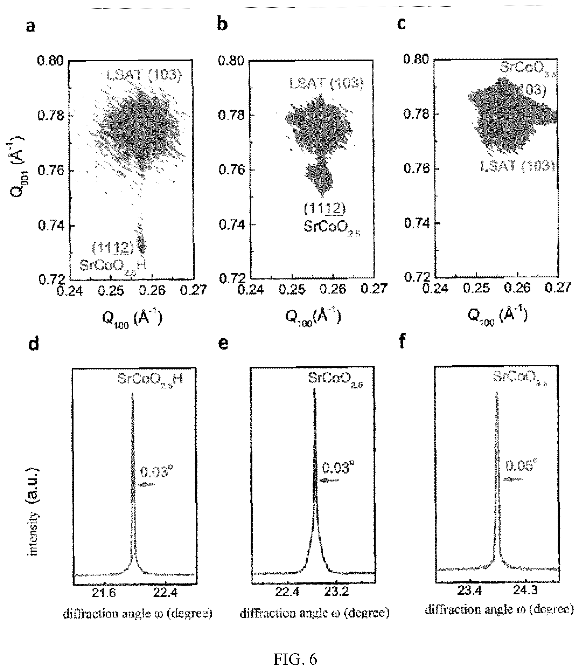

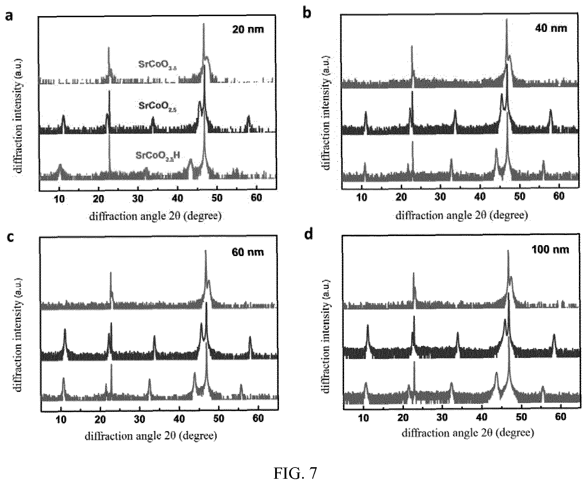

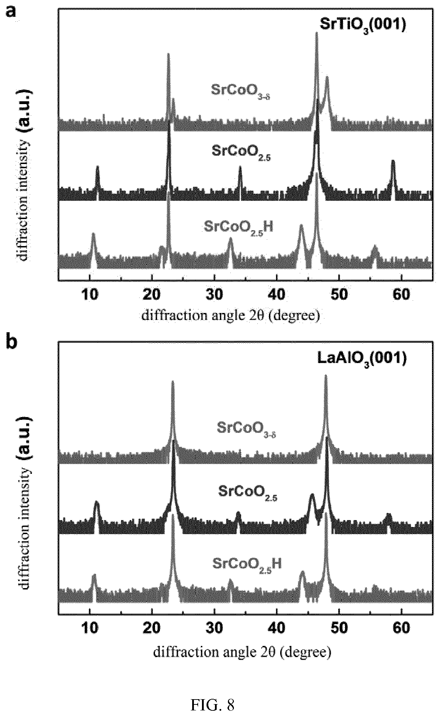

Referring to FIG.5, X-ray diffraction patterns of three structural phases SrCoO_{2.5}, SrCoO_{3-δ}, and SrCoO_{2.5}H are shown. In comparison with the SrCoO_{3-δ} phase having the perovskite structure, the SrCoO_{2.5} phase having the brownmillerite structure exhibits a superstructure peak derived from an alternating arrangement of oxygen octahedron and oxygen tetrahedron in an out-of-plane direction. Pseudo-cubic c-axis lattice constants of SrCoO_{2.5} and SrCoO_{3-δ} structures are respectively 0.397 nm and 0.381 nm based upon respective Bragg diffraction angles. The new phase SrCoO_{2.5}H also has a series of superstructure diffraction peaks, suggesting that the SrCoO_{2.5}H structure has a long range periodic lattice structure the same as the SrCoO_{2.5} structure. The new phase SrCoO_{2.5}H has a c-axis lattice constant of 0.411 nm which increases by 3.7% and 8.0% respectively compared to these of SrCoO_{2.5} and SrCoO_{3-δ}. In addition, referring to FIG. 6, the three structural phases SrCoO_{2.5}, SrCoO_{3-δ}, and SrCoO_{2.5}H have almost the same rocking curve full width at half maximum (FWHM) and in-plane lattice constant identical to the substrate (in-plane Q values of reciprocal spaces are consistent), suggesting that the films after the in situ growth and gating voltage controlling still remain of high crystalline quality. Furthermore, referring to FIG. 7 and FIG. 8, films with different thicknesses (from 20 nm to 100 nm) grown on LSAT(001) and films with different stresses grown on STO(001) and LAO(001) substrates are provided, and similar results are obtained, which fully demonstrates the effectiveness and intrinsic nature of the reversible tri-state phase transformation among the three phases SrCoO_{2.5}, SrCoO_{3-δ}, and SrCoO_{2.5}H. That is, this effect has no connection with a stress, a thickness or a dimension of a material and can be generalized to material systems of various structural forms.

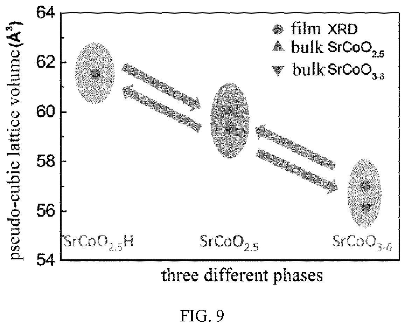

Referring to FIG. 9, a comparison of lattice volumes of the three structures obtained from XRD measurements with known bulk materials SrCoO₃ and SrCoO_{2.5} is shown. It can be seen from FIG. 9 that the lattice volume of the first phase is greater than the lattice volume of the second phase, and the lattice volume of the second phase is greater than the lattice volume of the third phase.

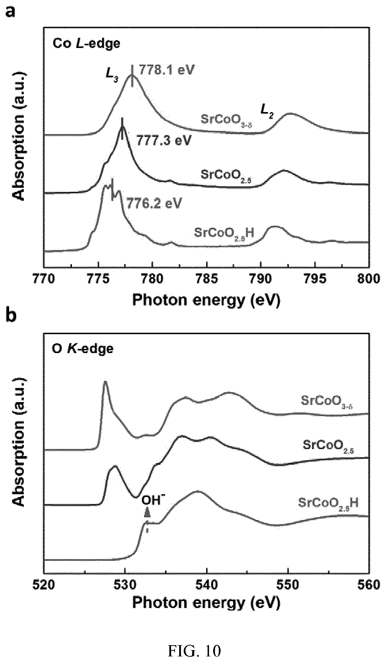

Referring to FIG. 10, the X-ray absorption spectroscopy at the L-absorption edge of Co and K-absorption edge of O in each of the three structure phases SrCoO_{2.5}, SrCoO_{3-δ}, and SrCoO_{2.5}H is measured in order to thoroughly understand the electronic structure of the new phase SrCoO_{2.5}H. A transition of an electron of Co from 2p orbital to 3d orbital is detected at L_{2,3}-absorption edge of Co and can be the basis for determining a valence state of corresponding compound. As shown in FIG. 10A, the peak positions of the L-absorption edges of Co are gradually shifted toward high-energy end from the new phase SrCoO_{2.5}H to the SrCoO_{2.5} phase and then to the SrCoO_{3-δ} phase, suggesting an gradual increase in valence states. In particular, the new phase SrCoO_{2.5}H has almost the same absorption spectroscopy characteristics, shape of the spectroscopy and peak position, as these of CoO, which suggests that Co in the new phase SrCoO_{2.5}H has a valence state of +2. At the same time, the X-ray absorption spectroscopy of Co in the SrCoO_{2.5} phase is also well in conformity with the previous studies, that is, Co in the SrCoO_{2.5} phase is +3 valent. The peak position of the L₃-absorption edge of Co in the SrCoO_{3-δ} phase is about 0.8 eV larger than that of the SrCoO_{2.5} phase, suggesting that less oxygen vacancy (δ<0.1) is possessed in the SrCoO_{3-δ} phase. In addition, the electronic states of the three structural phases are further studied by measuring K absorption spectroscopies of O (FIG. 10), in which K absorption of O is to measure a transition between Is occupied orbital of O and unoccupied 2p orbital of O. Compared with K-absorption edge of O in SrCoO_{3-δ}, in the SrCoO_{2.5} phase, the peak position at 527.5 eV is significantly weaken and the peak position at 528.5 eV is significantly enhanced, suggesting a transformation thereof from a complete oxygen octahedral coordination to a partial oxygen octahedral and partial oxygen tetrahedral coordination. However, in the new phase, the absorption peak at 528 eV is completely disappeared, suggesting that the oxygen-cobalt hybridization has been suppressed to a great extent.

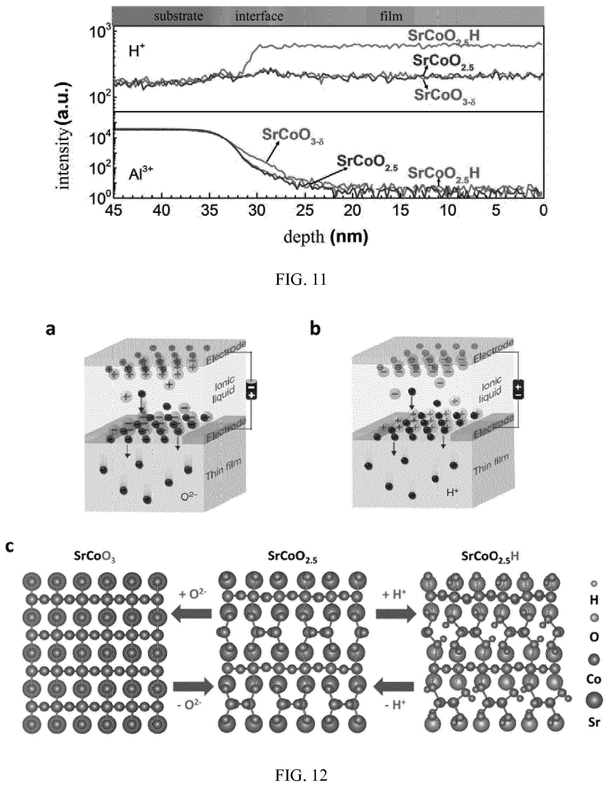

Referring to FIG. 11, to verify the insertion of the hydrogen ions into the SrCoO_{2.5} lattice, depth dependent curves of H elements and Al elements (from the LSAT substrate) in the three structural phases are measured by a secondary-ion mass spectrometry method. Compared to the LSAT substrate and the other two phases, a significant H signal in the new phase clearly verifies that a large amount of hydrogen atoms have been inserted into the SrCoO_{2.5} lattice and are uniformly distributed in the new phase. According to the test of absorption spectroscopy as described above again, the experimental evidence can determine that the Co ion has a valence state of +2, therefore, it is determined that the new phase has a structural formula of SrCoO_{2.5}H. In addition, a strong assorption peak at 532.5 eV in the preposed K-adsoprtion edge of O (FIG. 11b) is resulted from O-H bond, which provides a powerful evidence for the presence of H⁺ ion in the new phase.

Referring to FIG. 12, a process of regulating the ionic liquid gating voltage and a reversible regulation thereof to the three phases are summarized. In this structure, SrCoO₃ has a perovskite structure, in which the Co ion is surrounded by oxygen ions to form a oxygen octahedral structure. SrCoO_{2.5} has a brownmillerite structure. An alternating arrangement of an octahedron and a tetrahedron is formed by the material because every two Co ions loses one oxygen ion compared with SrCoO₃. While in SrCoO_{2.5}H, the hydrogen ion is connected to the oxygen ion in the oxygen tetrahedron to form a OH bond. A reversible structural transition among these three structures can be achieved by the insertion and extraction of the oxygen ions and the hydrogen ions under a drive of an electric field.

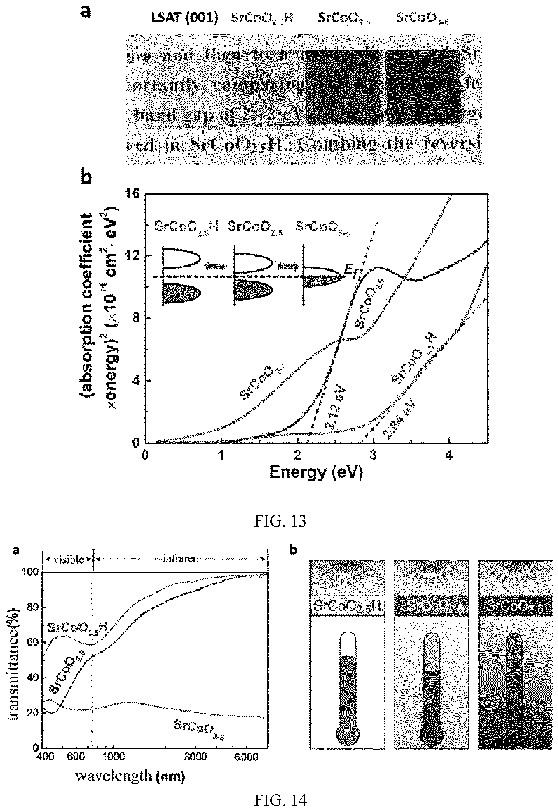

Referring to FIG. 13, photos of the three phases and variation of energy gaps thereof are provided. Referring to FIG. 13a, a comparison of transmittance among the three different phases SrCoO_{2.5}, SrCoO_{3-δ}, and SrCoO_{2.5}H each having a thickness of 50 nm and grown on the LSAT(001) substrate is shown, in which SrCoO_{2.5}H corresponds to the first phase, SrCoO_{2.5} corresponds to the second phase, and SrCoO_{3-δ} corresponds to the third phase. Images of the three structural phases can be seen from FIG. 13a. It can be found that SrCoO_{2.5}H and the LSAT (001) substrate appear as colorless, SrCoO_{2.5} appears as brown, while the SrCoO_{3-δ} phase appears as black. In combination with the structural transition controlled by the electric field, it can be found that this method can be a very effective mean to realize an electrochromic effect. In order to distinguish the different optical absorption properties of the three structural phases more intuitively, FIG. 13b shows the direct bandgaps of the three structural phases. Through fitting with a formula (αω)²-ω, it can be found that compared with SrCoO_{3-δ} having a metallic nature and SrCoO_{2.5} having a semiconductor property (direct bandgap: 2.12 eV), the new phase SrCoO_{2.5}H having Co²⁺ has a direct bandgap reaching 2.84 eV, and the figures contained therein also show the variation of respective bandgap during the structural transition clearly.

Referring to the corresponding optical transmission spectra in FIG. 14a, a dual-band electrochromic effect possessed by the tri-state phase transformation is also shown clearly. The SrCoO_{2.5}H phase (the first phase) has a transmittance over 30% greater than these of the other two phases in the visible light region, and the transmittance of the SrCoO_{2.5}H phase (the first phase) and the SrCoO_{2.5} phase (the second phase) are 60% greater than that of the SrCoO_{3-δ} phase (the third phase) in the infrared region (the wavelength reaches 8000 nm). In addition, FIG. 14b shows differences in permeability and thermal effect (i.e. the principle of a smart glass) from a regulation to infrared and visible light bands. In combination with the reversible phase transformation controlled by the electric field, the SrCoO_{2.5}H herein provides a great application prospect for the electrochromism, that is, an electric field regulation to a photopermeability can be performed selectively and independently at an infrared band and a visible light band by way of regulating a gate voltage. More specifically, when in the first phase (the SrCoO_{2.5}H phase), for example, since the permeabilities of the infrared section and the visible light section are relatively high, it is achievable that more infrared rays and visible lights enter into a room at the same time, so that the temperature and the brightness are relatively high in the room. While when in the second phase (the SrCoO_{2.5} phase), since the absorption at the visible light section is significant, a low brightness but a relatively high temperature can be achieved in the room. While when in the third phase (the SrCoO_{3-δ} phase), due to the simultaneous absorption at the visible light and infrared bands, a low brightness and a relatively low temperature can be achieved in the room. Therefore, the tri-state phase transformation realized by the material broadens the application scope of the smart glass.

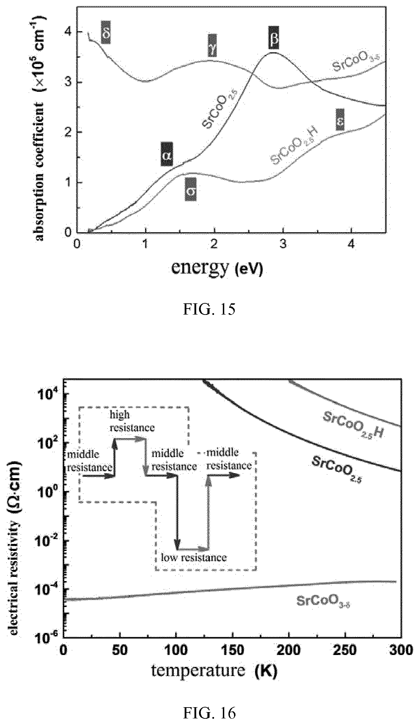

Referring to FIG. 15, a comparison of absorption coefficients of optical absorption spectra obtained from the transmittance spectra of the three phases of the material of the embodiment of the present disclosure is shown. It can be seen from the figure that when in an energy range below a photon energy of 4.0 eV, there are two main absorption peaks, i.e. intraband d-d transition (*α, σ, and δ*) at the low energy end and interband p-d transition (*β*, *ε, and γ*) at the high energy end, in all three structural phases. SrCoO_{3-δ} exhibits relatively strong light absorption at the whole spectrum band, which is consistent with its metallic nature. In addition, SrCoO_{2.5} and SrCoO_{2.5}H both exhibit an insulation property and form very strong absorptions (*β* and *ε*) near the direct bandgaps. In addition, the light absorption by the SrCoO_{2.5} phase is even greater than that by the SrCoO_{3-δ} phase at an energy range greater than the direct bandgap, owing to a larger p-d transition in the SrCoO_{2.5} phase. However, regarding to the SrCoO_{2.5}H phase, the absorption is strongly suppressed with the increase of the direct bandgap.

Referring to FIG. 16, it can be understood that the modulation to the transmittance spectra is derived from differences in energy band structure between the three different phases, which can be also reflected on the electrical transport. FIG. 16 shows the temperature dependences of resistivities of the three structure phases, from which it can be seen that SrCoO_{3-δ} is a good metal and has a resistivity of about 200 µΩ·cm, and the SrCoO_{2.5} phase and the SrCoO_{2.5}H phase both show semiconductor behaviors and have resistivities of 8 Ω·cm and 450 Ω·cm respectively at room temperature. The inserted figure shows a reversible transformation among different resistance states among the three structural phases under the regulating of the electric field, i.e. middle resistance state → high resistance state → middle resistance state → low resistance state → middle resistance state. Therefore, the electric-field-controlled phase transformation among multi-resistance states realized by the present disclosure establishes a model device unit based on a resistance switching memory.

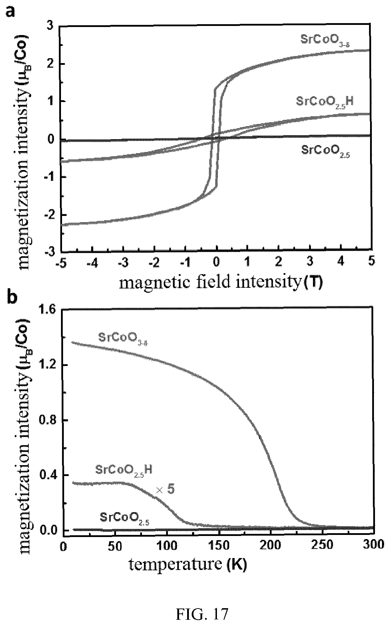

Referring to FIG. 17, a tri-state magnetoelectric coupling phenomenon closely associated with the structural transition is shown, that is, the magnetic property of the material can be regulated by an electric field to achieve a multi-states magnetic memory. Through a macroscopic magnetic measurement, the obtained saturation magnetic moment of the SrCoO_{3-δ} phase is 2.4 µ_{B}/Co, the Curie temperature of the SrCoO_{3-δ} phase is 240 K, while SrCoO_{2.5} only exhibits the intrinsic antiferromagnetic behavior of the material. In addition, in FIG. 17, the SrCoO_{2.5}H phase also exhibits an obvious hysteresis loop, the saturation magnetic moment of the SrCoO_{2.5}H phase is 0.6 µ_{B}/Co, and the Curie temperature of the SrCoO_{2.5}H phase is 125 K.

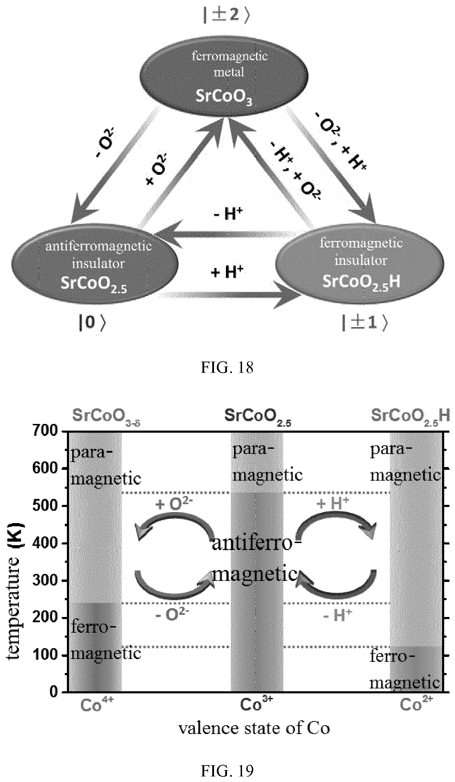

Referring to FIG. 18, this figure illustrates a regulation among three electrical and magnetic states resulting from the insertion/extraction of the oxygen ions and the hydrogen ions controlled by the electric field, which provides a new tri-state magnetoelectric coupling mechanism with a potential application value for a next generation electron device the magnetic property of which is controlled by an electric field.

Referring to FIG. 19, this figure shows that a transformation among magnetic properties at different temperatures is achieved by controlling the phase transformation or the valence state of Co via the electric field. For example, a ferromagnetic-antiferromagnetic-ferromagnetic transformation can be achieved at a temperature below 125 K; while a ferromagnetic-antiferromagnetic-paramagnetic transformation can be achieved between 125 k and 250 K; and a paramagnetic-antiferromagnetic-paramagnetic transformation can be achieved between 250 K and 537 K. In practical application, a switch among different magnetic ground states at different temperatures can be achieved by a method of controlling a movement of ion or the phase transformation via the electric field, thereby greatly enriching a range and a content of an electric control of magnetism.

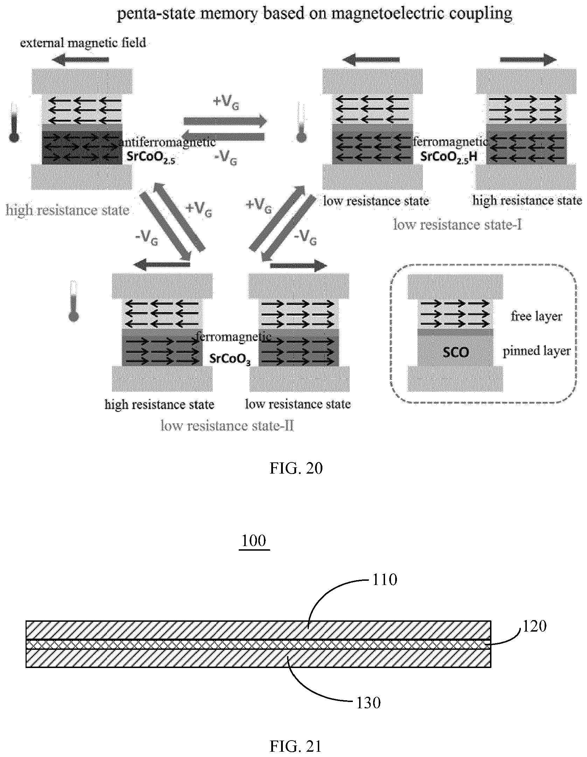

Referring to FIG. 20, a model of penta-state memory is established according to the magnetoelectric coupling and spin electronic effect on basis of the regulation to the magnetic ground states of the three phases. A spin-valve structure is established by using the three phases of SrCoOₓH_{y} having different spin ground states as a spin pinned layer and an epitaxial magnetic metal as a spin free layer. When regulating the gating voltage and magnetic ground state, a high resistance state, a low resistance state-I, and a low resistance state-II can be achieved, wherein the low resistance states are each further distinguished into a high resistance state and a low resistance state, thereby realizing the penta-state memory finally.

Referring to FIG. 21, a primary battery 100 is shown, including a cathode electrode 110 and an anode electrode 130 spaced from each other and an electrolyte 120 disposed between the cathode electrode 110 and the anode electrode 130. The cathode electrode 110 and the anode electrode 130 are the hydrogen-containing transition metal oxide having the structural formula of ABOₓH_{y} provided in the embodiments of the present disclosure. The electrolyte 120 is not limited. Any existing conductive electrolyte having sufficient oxygen ions and (or) hydrogen ions can be used.

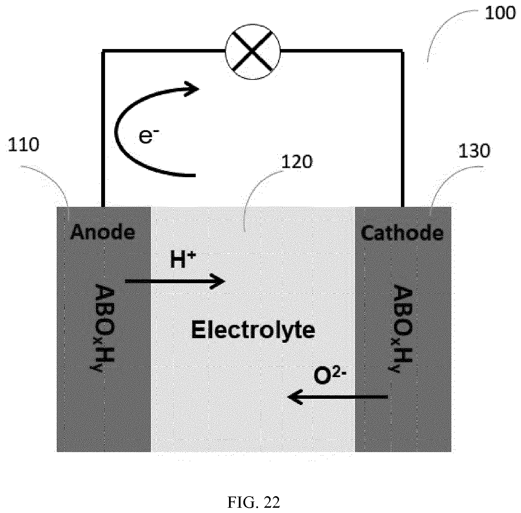

Referring to FIG. 22, a working principle of the primary battery 100 is illustrated. Based upon the reversible phase transformation, the primary battery 100 is a primary cell with the hydrogenated product (the first phase) and the oxidized product (the second phase) as materials of electrodes. In a discharge process, the anode electrode 130 and the cathode electrode 110 discharge H⁺ ion and O²⁻ ion respectively, the H⁺ ion and the O²⁻ ion are combinted to form H₂O, which is simultaneously accompanied by a generation of electric current. In a charge process, H₂O is hydrolyzed under an aciton of an electric field, the anode electrode 130 and the cathode electrode 110 are respectively hydrogenated and oxidized reversibly to re-generate the original product. Therefore, a reversible charge and discharge can be achieved by the primary battery based on the reversible phase transformation.

## Claims

1. A method for making a hydrogen-containing transition metal oxide, **characterized by** comprising the steps of:
S100, providing a transition metal oxide having a structural formula of ABO_{z}, wherein z is greater than or equal to 2 and smaller than or equal to 3;
S200, soaking the transition metal oxide with an ionic liquid, water in the ionic liquid is capable of being decomposed into hydrogen ions and oxygen ions under an action of an electric field; and
S300, applying an electric field to the transition metal oxide to cause the hydrogen ions in the ionic liquid to insert into the transition metal oxide to form the hydrogen-containing transition metal oxide, wherein the hydrogen-containing transition metal oxide is ABOₓH_{y}, wherein x is a numeric value in a range of 1 to 3, and y is a numeric value greater than 0 and smaller than or equal to 2.5;
wherein A is one or more of alkaline earth metal elements and rare-earth metal elements, wherein the alkaline earth metal elements are Be, Mg, Ca, Sr or Ba, and the rare-earth metal elements are La, Ce, Pr, Nd, Pm, Sm, Eu, Gd, Tb, Dy, Ho, Er, Tm, or Yb; and
wherein B is one or more of transition metal elements, wherein the transition metal elements are Co, Cr, Fe, Mn, Ni, Cu, Ti, Zn, Sc or V.

2. The method for making the hydrogen-containing transition metal oxide of claim 1, **characterized in that** the step of S100 comprises steps of:
S110, providing a substrate;
S120, depositing a film of the transition metal oxide having the structural formula of ABO_{z} onto a surface of the substrate; and
S130, forming a first electrode on a surface of the film of the transition metal oxide.

3. The method for making the hydrogen-containing transition metal oxide of claim 2, **characterized in that** the substrate is one of a ceramic substrate, a silicon substrate, a glass substrate, a metal substrate, or a polymer, and in the step of S120, the film of the transition metal oxide is obtained via an epitaxial growth on the surface of the substrate by using a pulsed laser deposition method.

4. The method for making the hydrogen-containing transition metal oxide of claim 2, **characterized in that** in the step of S130, the first electrode contacts the film of the transition metal oxide.

5. The method for making the hydrogen-containing transition metal oxide of claim 2, **characterized in that** the step of S300 comprises steps of:
S310, providing a second electrode and a power source;
S320, disposing the second electrode to be spaced from the first electrode and connecting the second electrode and the first electrode electrically and respectively to the power source;
S330, soaking the second electrode with the ionic liquid and applying an electric field in a direction from the second electrode to the first electrode by the power source.

6. The method for making the hydrogen-containing transition metal oxide of claim 1, wherein B is Co.

7. The method for making the hydrogen-containing transition metal oxide of claim 6, wherein A is Sr.

8. The method for making the hydrogen-containing transition metal oxide of claim 7, wherein z is 2.5.

## Patentansprüche

1. Verfahren zur Herstellung eines wasserstoffhaltigen Übergangsmetalloxids, **dadurch gekennzeichnet, dass** es die folgenden Schritte umfasst:
S100, Bereitstellen eines Übergangsmetalloxids mit einer Strukturformel von ABO_{z}, wobei z größer als oder gleich 2 und kleiner als oder gleich 3 ist;
S200, Tränken des Übergangsmetalloxids mit einer ionischen Flüssigkeit, wobei Wasser in der ionischen Flüssigkeit dazu in der Lage ist, unter einer Wirkung eines elektrischen Feldes zu Wasserstoffionen und Sauerstoffionen zersetzt zu werden; und
S300, Anlegen eines elektrischen Feldes an das Übergangsmetalloxid, um zu bewirken, dass die Wasserstoffionen in der ionischen Flüssigkeit in das Übergangsmetalloxid eindringen, um das wasserstoffhaltige Übergangsmetalloxid zu bilden, wobei das wasserstoffhaltige Übergangsmetalloxid ABOₓH_{y} ist, wobei x ein numerischer Wert in einem Bereich von 1 bis 3 ist und y ein numerischer Wert größer als 0 und kleiner als oder gleich 2,5 ist;
wobei A eines oder mehrere von alkalischen Erdmetallelementen und Seltenerdmetallelementen ist, wobei die alkalischen Erdmetallelemente Be, Mg, Ca, Sr oder Ba sind und die Seltenerdmetallelemente La, Ce, Pr, Nd, Pm, Sm, Eu, Gd, Tb, Dy, Ho, Er, Tm oder Yb sind; und
wobei B eines oder mehrere von Übergangsmetallelementen ist, wobei die Übergangsmetallelemente Co, Cr, Fe, Mn, Ni, Cu, Ti, Zn, Sc oder V sind.

2. Verfahren zur Herstellung des wasserstoffhaltigen Übergangsmetalloxids nach Anspruch 1, **dadurch gekennzeichnet, dass** der Schritt S100 folgende Schritte umfasst:
S110, Bereitstellen eines Substrats;
S120, Abscheiden eines Films des Übergangsmetalloxids mit der Strukturformel von ABO_{z} auf einer Oberfläche des Substrats; und
S130, Bilden einer ersten Elektrode auf einer Oberfläche des Films des Übergangsmetalloxids.

3. Verfahren zur Herstellung des wasserstoffhaltigen Übergangsmetalloxids nach Anspruch 2, **dadurch gekennzeichnet, dass** das Substrat eines von einem keramischen Substrat, einem Siliziumsubstrat, einem Glassubstrat, einem Metallsubstrat oder einem Polymer ist und in dem Schritt S120 der Film des Übergangsmetalloxids über ein epitaxiales Wachstum auf der Oberfläche des Substrats durch Anwenden eines Verfahrens der gepulsten Laserabscheidung erhalten wird.

4. Verfahren zur Herstellung des wasserstoffhaltigen Übergangsmetalloxids nach Anspruch 2, **dadurch gekennzeichnet, dass** in dem Schritt S130 die erste Elektrode den Film des Übergangsmetalloxids kontaktiert.

5. Verfahren zur Herstellung des wasserstoffhaltigen Übergangsmetalloxids nach Anspruch 2, **dadurch gekennzeichnet, dass** der Schritt S300 folgende Schritte umfasst:
S310, Bereitstellen einer zweiten Elektrode und einer Stromquelle;
S320, Abscheiden der zweiten Elektrode, um von der ersten Elektrode beabstandet zu sein, und elektrisches Verbinden der zweiten Elektrode und der ersten Elektrode und jeweils mit der Stromquelle;
S330 Tränken der zweiten Elektrode mit der ionischen Flüssigkeit und Anlegen eines elektrischen Feldes in einer Richtung von der zweiten Elektrode zu der ersten Elektrode durch die Stromquelle.

6. Verfahren zur Herstellung des wasserstoffhaltigen Übergangsmetalloxids nach Anspruch 1, wobei B Co ist.

7. Verfahren zur Herstellung des wasserstoffhaltigen Übergangsmetalloxids nach Anspruch 6, wobei A Sr ist.

8. Verfahren zur Herstellung des wasserstoffhaltigen Übergangsmetalloxids nach Anspruch 7, wobei z 2,5 ist.

## Revendications

1. Procédé de fabrication d'un oxyde de métal de transition contenant de l'hydrogène, **caractérisé par le fait qu'**il comprend les étapes de :
S100, fourniture d'un oxyde de métal de transition ayant une formule structurale de ABO_{z}, dans laquelle z est supérieur à ou égal à 2 et inférieur à ou égal à 3 ;
S200, imbibition de l'oxyde de métal de transition avec un liquide ionique, l'eau dans le liquide ionique étant capable d'être décomposée en ions hydrogène et ions oxygène sous l'action d'un champ électrique ; et
S300, application d'un champ électrique à l'oxyde de métal de transition pour amener les ions hydrogène se trouvant dans le liquide ionique à s'insérer dans l'oxyde de métal de transition afin de former l'oxyde de métal de transition contenant de l'hydrogène, dans lequel l'oxyde de métal de transition contenant de l'hydrogène est ABOₓH_{y}, dans lequel x est une valeur numérique dans une plage de 1 à 3, et y est une valeur numérique supérieure à 0 et inférieure ou égale à 2,5 ;
dans lequel A est un ou plusieurs éléments parmi des éléments de métal alcalino-terreux et des éléments métalliques de terres rares, dans lequel les éléments de métal alcalino-terreux sont Be, Mg, Ca, Sr ou Ba, et les éléments métalliques de terres rares sont La, Ce, Pr, Nd, Pm, Sm, Eu, Gd, Tb, Dy, Ho, Er, Tm, ou Yb ; et
dans lequel B est un ou plusieurs éléments de métal de transition, dans lequel les éléments de métal de transition sont Co, Cr, Fe, Mn, Ni, Cu, Ti, Zn, Sc ou V.

2. Procédé de fabrication de l'oxyde de métal de transition contenant de l'hydrogène selon la revendication 1, **caractérisé en ce que** l'étape de S100 comprend les étapes de :
S110, fourniture d'un substrat ;
S120, dépôt d'un film de l'oxyde de métal de transition ayant la formule structurale de ABO_{z} sur une surface du substrat ; et
S130, formation d'une première électrode sur une surface du film de l'oxyde de métal de transition.

3. Procédé de fabrication de l'oxyde de métal de transition contenant de l'hydrogène selon la revendication 2, **caractérisé en ce que** le substrat est l'un d'un substrat en céramique, d'un substrat en silicium, d'un substrat en verre, d'un substrat en métal, ou d'un polymère, et à l'étape S120, le film de l'oxyde de métal de transition est obtenu au moyen d'une croissance épitaxiale sur la surface du substrat en utilisant un procédé de dépôt par laser pulsé.

4. Procédé de fabrication de l'oxyde de métal de transition contenant de l'hydrogène selon la revendication 2, **caractérisé en ce que**, à l'étape de S130, la première électrode est en contact avec le film de l'oxyde de métal de transition.

5. Procédé de fabrication de l'oxyde de métal de transition contenant de l'hydrogène selon la revendication 2, **caractérisé en ce que** l'étape de S300 comprend les étapes de :
S310, fourniture d'une deuxième électrode et d'une source d'énergie ;
S320, disposition de la deuxième électrode pour être espacée de la première électrode et connexion de la deuxième électrode et de la première électrode électriquement et respectivement à la source d'énergie ;
S330, imbibition de la deuxième électrode avec le liquide ionique et application d'un champ électrique dans une direction allant de la deuxième électrode à la première électrode par la source d'énergie.

6. Procédé de fabrication de l'oxyde de métal de transition contenant de l'hydrogène selon la revendication 1, dans lequel B est Co.

7. Procédé de fabrication de l'oxyde de métal de transition contenant de l'hydrogène selon la revendication 6, dans lequel A est Sr.

8. Procédé de fabrication de l'oxyde de métal de transition contenant de l'hydrogène selon la revendication 7, dans lequel z est 2,5.
